# EUROPÄISCHE PATENTSCHRIFT

(11) **EP 0 798 030 B1**
(45) Veröffentlichungstag und Bekanntmachung des Hinweises auf die Patenterteilung: **28.05.2003**
(21) Anmeldenummer: 97104978.8
(22) Anmeldetag: 24.03.1997
(51) Int. Cl.: B01D 53/26, B01J 2/00

(54) **Verfahren zur Kühlung von wasserbindenden Granulaten**
Process for cooling water absorbing granules
Procédé de refroidissement de granulats absorbant l'eau

(30) Priorität: 26.03.1996 DE 19611950
(43) Veröffentlichungstag der Anmeldung: 01.10.1997
(73) Patentinhaber: BASF AKTIENGESELLSCHAFT, 67056 Ludwigshafen (DE)
(72) Erfinder: Jäger, Michael, 69514 Laudenbach (DE); Grimmer, Karl, 67105 Schifferstadt (DE); Nitzschmann, Robert E. Dr., 67227 Frankenthal (DE); Armbruster, Harald, Dr., 67117 Limburgerhof (DE)
(74) Vertreter: Isenbruck, Günter, Dr.

(56) Entgegenhaltungen:
- DATABASE WPI Section Ch, Week 7928 Derwent Publications Ltd., London, GB; Class J08, AN 79-52050 XP002053300 & SU 624 097 A (SIBE BR GRAIN RES) , 4.August 1978

## Beschreibung

Die Erfindung betrifft ein Verfahren zur Kühlung von wasserbindenden Granulaten aus Mineraldünger, durch Zufuhr von kühler Luft.

Bei der Herstellung von Granulaten aus Mineraldünger, beispielsweise aus Nitrophosphat (NP), Nitrophosphat-Kalium (NPK), Kalkammonsalpeter (KAS), Ammonsulfatsalpeter (ASS) und dergleichen, muß das granulierte Produkt, das die Fertigung nach der Trocknung ca. 90 °C bis 100 °C heiß verläßt, zur Einspeicherung, Absackung oder sonstigen Abgabe auf 35 °C bis 40 °C abgekühlt werden. Das geschieht üblicherweise in Wirbelbett- oder Trommelapparaten mit Hilfe von Umgebungsluft. Diese wird vor den Apparaten angesaugt und mit dem heißen Granulat in Kontakt gebracht. Hierdurch wird die Produktwärme an die Luft abgegeben. Die Geschwindigkeit der Wärmeabfuhr, die durch diese Kühlung erreichbare Endtemperatur und damit die Durchsatzleistung, d.h. der maximale Durchsatz an Düngemittelgranulat, bei dem eine Austrittstemperatur von 40 °C nicht überschritten wird, sind bei gegebenen Apparaten abhängig von der Temperatur der Umgebungsluft. Jahreszeitlich bedingt ist deshalb z.B. die Durchsatzleistung im Sommer bei hohen Außentemperaturen (20 °C bis 35 °C) deutlich niedriger als im Winter bei niedrigen Außentemperaturen (0 °C bis 15 °C).

Die Produktionsleistung der Verfahren zur Herstellung von Granulaten aus Mineraldüngemitteln ist daher in der warmen Jahreszeit oft durch die eingeschränkte Leistung der Produktkühler limitiert. Will man diese Einschränkung nicht in Kauf nehmen, müssen zusätzliche Produktkühler installiert werden, oder die Luft muß mit teuren Kühlmaschinen/Kühlkreisläufen trocken gekühlt werden. Beide Fälle bedeuten hohen apparativen und finanziellen Aufwand, wobei die zusätzlich installierten Apparate in kalten Jahreszeiten ungenutzt bleiben. Dies ist in der Regel wirtschaftlich nicht tragbar.

Aus diesem Grund ist es zweckmäßig, die eingesetzte Kühlluft mit einfachen Mitteln zu kühlen. Dabei ist die Kühlung durch Verdunstung einer Flüssigkeit, beispielsweise Wasser in einem Gas, ein weitverbreitetes, gängiges Verfahren in der Klimatechnik, der Energietechnik und anderen Bereichen. Die Verdunstung zum Beispiel von Wasser in Luft bewirkt eine Temperaturabsenkung der Luft und des Wassers und eine Befeuchtung des Gases. Technisch wird die Verdunstung erreicht durch Bedüsen der Luft mit Wasser oder durch Vorbeileiten der Luft an berieselten Flächen.

Für nicht wasserbindende Güter wie Kunststoffgranulate ist der Einsatz der Verdunstungskühlung zur Leistungssteigerung von Produktkühlern bekannt. Ein direkter Kontakt des zu kühlenden Gutes mit Wasser ist dabei tolerierbar oder sogar erwünscht, wie beispielsweise der DE-A1 30 14 951 entnommen werden kann.

Granulate aus Mineraldünger sind jedoch stark wasserbindend, also hygroskopisch, weshalb bei getrocknetem Granulat durch entsprechende Maßnahmen bei Transport, Lagerung und Handhabung dafür Sorge getragen wird, daß es möglichst nicht in Kontakt mit Feuchtigkeit kommt. Die Feuchtigkeitsaufnahme führt nämlich zum Verbacken, zur Kornerweichung bis hin zum Zerfall der Körner. Aus diesem Grund besteht bisher in der Fachwelt die Auffassung, daß eine Kühlung solcher Produkte mit Luft hoher relativer Feuchte zu Produktveränderungen und Qualitätsverlusten führen muß.

Allerdings beschreibt die DD-A 136 956 ein Verfahren zur Herstellung nichtstaubender Düngemittelgranulate, bei dem das trockene, aber noch heiße Granulat direkt mit Wasser besprüht wird. Die befeuchtete Kornoberfläche wird dabei angelöst und verhärtet bei der anschließend erforderlichen erneuten Trocknung. Danach erfolgt eine konventionelle Produktkühlung. Hier wird der an sich unerwünschte Effekt der Anlösung der Granulate durch Wasser zur Veränderung der Produkteigenschaften eingesetzt.

Der Erfindung liegt die Aufgabe zugrunde, die saisonal bedingte Leistungseinbuße bei der Kühlung von hygroskopischen Granulaten aus Mineraldünger durch ein einfach zu realisierendes und kostengünstiges Verfahren zu beseitigen.

Lösung der Aufgabe ist ein Verfahren zur Kühlung von wasserbindenden Granulaten aus Mineraldünger durch Zufuhr eines kühlen Luftstroms, das dadurch gekennzeichnet ist, daß die vorkühlung des Luftstromes durch Verdunstung von Wasser unter Erhalt eines befeuchterten und wassertröpfchen frein Luftstromes durchgeführt wird. Entgegen der allgemein bestehenden Auffassung wurde überraschenderweise gefunden, daß während des Kühlvorganges aus der vorgekühlten, befeuchteten Luft, die eine hohe relative Luftfeuchtigkeit besitzt, kein Wasser in die Granulate aufgenommen wird. Entsprechende Untersuchungen haben ergeben, daß keine Qualitätsunterschiede zwischen konventionell gekühlten und mittels der Erfindung gekühlten Produkten feststellbar ist. Das erfindungsgemäße Verfahren ist anwendbar bei Granulaten aus Mineraldünger.

Gemäß einer besonders vorteilhaften Ausbildung der Erfindung erfolgt die Verdunstung des Wassers durch Verdüsung in den Luftstrom.

Dabei muß auf eine so feine Vernebelung geachtet werden, daß keine Tröpfchen, auch nicht solche kleinster Größe, gebildet werden. Dies ist beispielsweise mit Wasserdispersionssystemen möglich, wie sie unter der Bezeichnung "DUSTEX" von der VSR Engineering GmbH Fördertechnik vertrieben werden. Die Verdunstung des Wassers kann auch in an sich bekannter Weise durch Berieselung von Flächen oder Gewebematerial erzielt werden, die mit dem Luftstrom in Berührung stehen.

Ganz allgemein können handelsübliche Vorrichtungen zur Verdunstung von Wasser und zur Verdüsung eingesetzt werden, sofern sichergestellt ist, daß die Verdunstung des Wassers vollständig erfolgt und daß keine Wassertröpfchen vom Luftstrom mitgerissen werden und in Kontakt mit dem Granulat kommen können. Dies läßt sich durch hinreichend feine Verdüsung, durch hinreichend lange Verdunstungsstrecken sowie durch Tropfenabscheider und ähnliches erreichen. Die Luft kann nach der Kühlung durch Verdunstung von Wasser eine relative Feuchtigkeit von insbesondere etwa 75% bis 95% aufweisen, ohne daß dies in irgendeiner Weise die Qualität des wasserbindenden hydrophilen Granulats beeinträchtigt.

Weitere Vorteile und Einzelheiten der Erfindung können den folgenden Ausführungsbeispielen entnommen werden.

### Beispiel 1

Die einem Trommelkühler zugeführte Kühlluft wurde mit Düsen befeuchtet, wie sie im Firmenprospekt der VSR Engineering GmbH "DUSTEX Wasserdispersions-System" (1990) beschrieben ist. Der Wasserdurchsatz betrug 172 kg/h. Das zu kühlende Granulat war Nitrophosphat-Kalium-Dünger NPK 15+15+15. Diese Bezeichnung nach dem deutschen Düngemittelgesetz bedeutet, daß je 15 Gew.-% N, P₂O₅, K₂O enthalten sind.

Es wurden folgende Werte gemessen:

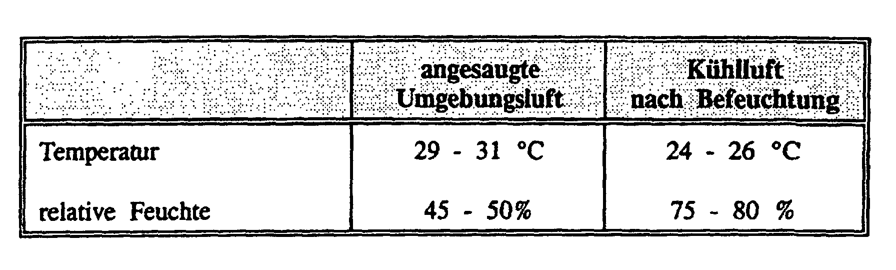

Ohne die erfindungsgemäße Maßnahme konnten bei den gegebenen Eigenschaften der angesaugten Umgebungsluft nur 45 t/h Düngemittelgranulat NPK 15+15+15 gekühlt werden.

Die erfindungsgemäße Absenkung der Temperatur des Kühlluftstroms durch Befeuchtung führe zu einer Durchsatzsteigerung um 6 t/h auf 51 t/h.

### Beispiel 2

Unter Anwendung derselben erfindungsgemäßen Maßnahmen wie bei Beispiel 1 mit einem Wasserdurchsatz von 160 kg/h wurden folgende Werte gemessen:

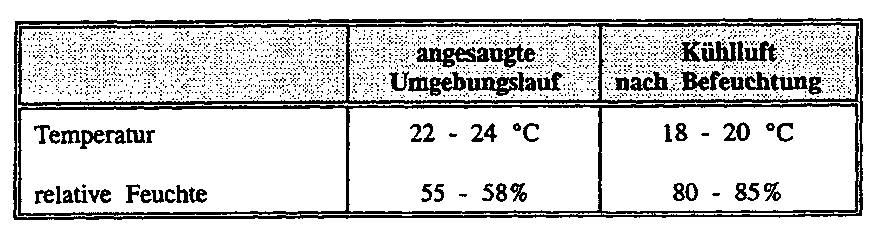

Die Leistung wurde von 50 t/h auf 56 t/h NPK 15+15+15 gesteigert.

Als Ergebnis umfangreicher Versuche wurde gefunden, daß während des Kühlvorgangs mit erfindungsgemäß gekühlter befeuchteter Umgebungsluft mit hoher relativer Luftfeuchtigkeit aus dieser kein Wasser in die Granulate aufgenommen worden ist. Es waren keine Qualitätsunterschiede zwischen konventionell gekühltem und mittels des erfindungsgemäßen Verfahrens gekühltem Produkt feststellbar.

## Patentansprüche

1. Verfahren zur Kühlung von Granulaten aus Mineraldünger, durch Zufuhr eines vorgekühlten Luftstroms, **dadurch gekennzeichnet, daß** die Vorkühlung des Luftstromes durch Verdunstung von Wasser unter Erhalt eines befeuchteten und wassertröpfchenfreien Luftstromes durchgeführt wird.

2. Verfahren nach Anspruch 1, **dadurch gekennzeichnet, daß** die Verdunstung des Wassers durch Verdüsung in den Luftstrom erzielt wird.

3. Verfahren nach Anspruch 1 oder 2, **dadurch gekennzeichnet, daß** die Verdunstung des Wassers durch Berieselung von Flächen oder Gewebematerial erzielt wird, die mit dem Luftstrom in Berührung stehen.

4. Verfahren nach einem der Ansprüche 1 bis 3, **dadurch gekennzeichnet, daß** die Luft nach der Vorkühlung durch Verdunstung von Wasser eine relative Feuchtigkeit von etwa 75% bis 95% besitzt.

## Claims

1. A process for the cooling of granules of inorganic fertilizer by feeding in a precooled stream of air, which comprises precooling the stream of air by evaporation of water to obtain a humidified stream of air which is free of water droplets.

2. The process as claimed in claim 1, wherein the evaporation of the water is achieved by spraying a jet into the stream of air.

3. The process as claimed in claim 1 or 2, wherein the evaporation of the water is achieved by spraying surfaces or textile material which are in contact with the stream of air.

4. The process as claimed in any of claims 1 to 3, wherein the air after precooling by evaporation of water has a relative humidity of from 75% to 95%.

## Revendications

1. Procédé de refroidissement de granulats d'engrais minéraux, par amenée d'un courant d'air prérefroidi, **caractérisé en ce que** le prérefroidissement du courant d'air est réalisé par évaporation d'eau, avec obtention d'un courant d'air humidifié et exempt de gouttelettes d'eau.

2. Procédé selon la revendication 1, **caractérisé en ce que** l'évaporation de l'eau est réalisée par injection dans le courant d'air.

3. Procédé selon la revendication 1 ou 2, **caractérisé en ce que** l'évaporation de l'eau est réalisée par arrosage de surfaces ou d'un matériau de type tissu, qui est en contact avec le courant d'air.

4. Procédé selon l'une des revendications 1 à 3, **caractérisé en ce que** l'air, après le refroidissement par évaporation d'eau, a une humidité relative d'environ 75 à 95 %.
